# EUROPÄISCHE PATENTSCHRIFT

(11) **EP 0 979 706 B1**
(45) Veröffentlichungstag und Bekanntmachung des Hinweises auf die Patenterteilung: **31.03.2004**
(21) Anmeldenummer: 99114201.9
(22) Anmeldetag: 23.07.1999
(51) Int. Cl.: B23Q 1/00, B23Q 39/04

(54) **Werkzeugmaschine**
Machine tool
Machine-outil

(30) Priorität: 08.08.1998 DE 19835954
(43) Veröffentlichungstag der Anmeldung: 16.02.2000
(73) Patentinhaber: Index-Werke GmbH & Co. KG Hahn & Tessky, 73730 Esslingen (DE)
(72) Erfinder: Link, Helmut, Friedrich, 73773 Aichwald 1 (Schanbach) (DE); Trautmann, Günther, Heinrich, 73230 Kirchheim-Nabern (DE)
(74) Vertreter: Hoeger, Stellrecht & Partner

(56) Entgegenhaltungen:
- EP-A- 0 811 464
- US-A- 4 185 366

## Beschreibung

Die Erfindung betrifft eine Werkzeugmaschine umfassend ein Maschinengestell, eine um eine Trommelachse innerhalb eines maximalen Winkelbereichs gegenüber dem Maschinengestell drehbar angeordnete Trommel mit einer Vielzahl von an dieser gehaltenen Bearbeitungseinrichtungen und mit der Trommel mitdrehbaren, den Bearbeitungseinrichtungen zugeordneten Antrieben, eine stationäre Steuer- und Versorgungseinrichtung für die Antriebe und eine Drehversorgungseinheit, welche einerseits mit der drehbaren Trommel verbundene sowie andererseits stationär gegenüber dem Maschinengestell gehaltene unterbrechungsfreie und durch Drehung der Trommel verformbare Leitungsstränge aufweist, welche sich in Richtung der Trommelachse erstrecken.

Eine derartige Werkzeugmaschine ist beispielsweise aus der DE 196 22 475 bekannt, wobei bei dieser die Trommel um eine horizontale Trommelachse drehbar ist und somit in horizontaler Richtung eine sich auf einer Seite der Trommel erstreckende Anordnung der Leitungsstränge möglich ist.

Derart aufgebaute Werkzeugmaschinen haben jedoch den Nachteil, daß die zusätzlich zur Baulänge der Trommel in Richtung der Trommelachse vorgesehenen Leitungsstränge einen erheblichen Raum benötigen.

Der Erfindung liegt daher die Aufgabe zugrunde, eine Werkzeugmaschine der gattungsgemäßen Art derart zu verbessern, daß der Raumbedarf für die verdrehbaren Leitungsstränge in Richtung der Trommelachse möglichst gering ist.

Diese Aufgabe wird bei einer Werkzeugmaschine der eingangs beschriebenen Art erfindungsgemäß dadurch gelöst, daß die Leitungsstränge sich in einen trommelachsennahen Durchbruch der Trommel hineinerstrecken.

Der Vorteil dieser Lösung ist darin zu sehen, daß damit auch die Baulänge der Trommel in Richtung der Trommelachse ausgenutzt werden kann, um die Leitungsstränge unterzubringen. Damit ist auch die Möglichkeit geschaffen, die Werkzeugmaschine mit im wesentlichen vertikal stehender Trommelachse auszuführen und dabei noch innerhalb üblicher Höhenmaße zu bleiben.

Alternativ und ergänzend zu dieser erfindungsgemäßen Lösung ist es jedoch außerdem vorteilhaft, wenn jeder Leitungsstrang einen sich in einer ersten Richtung von einem stationären Halter zu einer um die Trommelachse frei drehbar angeordneten Zwischenumlenkung erstreckenden ersten Leitungsstrangabschnitt und einen sich von der Zwischenumlenkung in einer zur ersten Richtung entgegengesetzten zweiten Richtung zu einem mit der Trommel mitdrehenden Halter erstreckenden zweiten Leitungsstrangabschnitt aufweist.

Der Vorteil dieser Lösung ist darin zu sehen, daß durch das Vorsehen eines ersten Leitungsstrangabschnitts und eines zweiten, in entgegengesetzter Richtung zum ersten Leitungsstrangabschnitt verlaufenden Leitungsstrangabschnitts die Möglichkeit geschaffen wurde, einerseits eine möglichst große Länge des verdrehbaren Leitungsstrangs, nämlich die Summe der Längen des ersten und zweiten Leitungsstrangabschnitts vorzusehen, und andererseits dennoch eine möglichst kompakte Bauweise der Werkzeugmaschine zu erreichen.

Besonders günstig lassen sich die ersten und zweiten Leitungsstrangabschnitte dann anordnen, wenn die ersten Leitungsstrangabschnitte und die zweiten Leitungsstrangabschnitte in unterschiedlichem radialem Abstand von der Trommelachse verlaufen, da dann jeder der Leitungsstrangabschnitte ausreichend Raum zur Verdrillung oder Torsion hat.

Insbesondere dann, wenn die Leitungsstrangabschnitte in eine zentrale, trommelachsennahe Ausnehmung der Trommel eintauchen, hat es sich als für den Aufbau besonders günstig erwiesen, wenn die zweiten Leitungsstrangabschnitte in größerem radialen Abstand von der Trommelachse verlaufen als die ersten Leitungsstrangabschnitte, da die zweiten Leitungsstrangabschnitte dann an dem mit der Trommel mitdrehenden Halter enden, der dann so angeordnet werden kann, daß eine möglichst kurze Verbindung zu den jeweiligen Antrieben für die Bearbeitungseinrichtungen realisiert werden kann.

Besonders günstig lassen sich die Leitungsstrangabschnitte in einer Grundstellung der Trommel dann anordnen, wenn der erste und der zweite Leitungsstrangabschnitt eines Leitungsstrangs im wesentlichen in einer durch die Trommelachse hindurchverlaufenden Ebene liegen, so daß damit eine Vielzahl von Leitungssträngen mit jeweils ersten und zweiten Leitungsstrangabschnitten um die Trommelachse herum angeordnet werden kann.

Bei den voranstehend beschriebenen Ausführungsbeispielen, könnte einer der Leitungsstrangabschnitte noch im unwesentlichen Abstand von der Trommelachse verlaufen.

Bei einer Vielzahl von Leitungssträngen und insbesondere bei dicken Leitungssträngen ist es jedoch vorteilhaft, wenn beide Leitungsstrangabschnitte in einem Abstand von der Trommelachse verlaufen, welcher mindestens einer Dicke de jeweiligen Leitungsstrangs entspricht.

In diesem Fall wird beim Drehen der Trommel jeder Leitungsstrang nicht nur um seine Längsrichtung verdreht oder tordiert sondern auch noch in zur Trommelachse schrauben- oder wendelähnliche Form mit variierender Steigung gebracht.

Insbesondere zur günstigen Anordnung einer Vielzahl von Leitungssträngen auf möglichst kleinem Raum um die Trommelachse herum ist es günstig, wenn eine Zahl von ersten Leitungsstrangabschnitten der Leitungsstränge in einer um die Trommelachse herum verlaufenden ersten Fläche verläuft und die entsprechende Zahl von zweiten Leitungsstrangabschnitten in einer um die Trommelachse herum verlaufenden zweiten Fläche verläuft.

Diese Flächen können beispielsweise Mantelflächen eines elliptischen Prismas sein. Als besonders günstig hat es sich jedoch erwiesen, wenn diese Flächen Mantelflächen eines Kreiszylinders sind.

Die Zwischenumlenkungen zwischen den ersten Leitungsstrangabschnitten und den zweiten Leitungsstrangabschnitten können prinzipiell beliebig ausgebildet und frei bewegbar angeordnet sein.

Um jedoch eine Führung der Leitungsstränge im Bereich der Zwischenumlenkungen zu erreichen, ist vorzugsweise vorgesehen, daß die Zwischenumlenkungen der Leitungsstränge an einem um die Trommelachse drehbaren Zwischenhalter geführt sind.

Damit ist sichergestellt, daß beim Drehen der Trommel relativ zum Maschinengestell sich die Leitungsstränge im Bereich ihrer Zwischenumlenkungen nicht ineinander wickeln.

Hinsichtlich der Verdrehung der ersten und zweiten Leitungsstrangabschnitte wurden im Zusammenhang mit der bisherigen Beschreibung der erfindungsgemäßen Lösung keine näheren Angaben gemacht außer die, daß sowohl der erste als auch der zweite Leitungsstrangabschnitt sich verdrehen sollen.

Besonders günstig ist es, wenn der erste Leitungsstrangabschnitt und der zweite Leitungsstrangabschnitt sich derart verdrehen, daß die Drehwinkel pro Längeneinheit des ersten und des zweiten Leitungsstrangabschnitts ungefähr gleich groß sind, das heißt, daß die Beanspruchung des Leitungsstrangs durch Verdrehung im ersten und im zweiten Leitungsabschnitt ungefähr gleich groß ist.

Vorzugsweise führt dies dazu, daß das Verhältnis des Teilwinkels, um welchen sich der erste Leitungsstrangabschnitt verdreht, zum Teilwinkel, um welchen sich der zweite Leitungsstrangabschnitt verdreht, ungefähr dem Verhältnis einer Länge des ersten Leitungsstrangabschnitts zu einer Länge des zweiten Leitungsstrangabschnitts entspricht.

Eine derartige Verdrehung ließe sich beispielsweise durch einen mit der Drehung der Trommel gekoppelten Drehantrieb für den Zwischenhalter erzwingen. Ein solcher ist jedoch aufwendig.

Aus diesem Grund sieht eine besonders einfache Lösung vor, daß der Zwischenhalter um die Trommelachse frei drehbar ist und daß sich die Verdrehung desselben beim Drehen der Trommel selbsttätig einstellt.

Um zumindest bei maximaler Verdrehung der Trommel relativ zum Maschinengestell die gewünschten Verhältnisse der Verdrehung des ersten Leitungsstrangabschnitts und des zweiten Leitungsstrangabschnitts sicherzustellen, ist vorgesehen, daß sich bei maximaler Verdrehung der Trommel relativ zum Maschinengestell der Zwischenhalter relativ zum Maschinengestell maximal um einen Winkel verdreht, welcher dem dem ersten Leitungsstrangabschnitt zugeordneten maximalen Teilwinkel entspricht und insbesondere außerdem relativ zur Trommel maximal um einen Winkel verdreht, welcher dem dem zweiten Leitungsstrangabschnitt zugeordneten maximalen Teilwinkel entspricht.

Um ferner dem Zwischenhalter noch die Möglichkeit zu geben, eine Verkürzung der ersten und zweiten Leitungsstrangabschnitte zu kompensieren, ist vorzugsweise vorgesehen, daß der Zwischenhalter in Richtung der Trommelachse bewegbar angeordnet ist, so daß die Möglichkeit besteht, die Leitungsstränge mit ihren Zwischenumlenkungen am Zwischenhalter zu fixieren.

Im Zusammenhang mit der bisherigen Erläuterung der erfindungsgemäßen Werkzeugmaschinen wurde stets davon ausgegangen, daß die Trommelachse sowohl horizontal als auch vertikal ausgerichtet sein kann, da die in erfindungsgemäßer Weise eintretende vorteilhafte Verkürzung der Baulänge der Drehversorgungseinheit sich unabhängig von der Ausrichtung der Trommelachse auswirkt.

Besonders günstig läßt sich die erfindungsgemäße Lösung jedoch dann einsetzen, wenn die Trommelachse der Werkzeugmaschine ungefähr in vertikaler Richtung verläuft, da in diesem Fall die erfindungsgemäße Verkürzung der Baulänge wesentlich ist, um die Maschinenhöhe so gering wie möglich zu halten.

Dabei ist zunächst die Ausrichtung der Bearbeitungseinrichtungen beliebig. Beispielsweise wäre es denkbar, die Achsen der Bearbeitungseinrichtungen nach wie vor in horizontaler Richtung oder in beliebigen Zwischenausrichtungen zwischen der horizontalen und der vertikalen Richtung anzuordnen.

Eine für die Handhabung der Werkstücke jedoch besonders günstige Lösung sieht vor, daß die Bearbeitungseinrichtungen in der Werkzeugmaschine hängend angeordnet sind. Diese Lösung hat den Vorteil, daß insbesondere bei an den Bearbeitungseinrichtungen hängend angeordneten Werkstücken ein vorteilhafter Spänefall entsteht und außerdem noch die Möglichkeit besteht, eine besonders günstige Handhabung der Werkstücke dadurch zu integrieren, daß die Bearbeitungseinrichtungen in vertikaler Richtung, vorzugsweise in Richtung einer Z-Achse, bewegbar sind, so daß sich damit mit den Bearbeitungseinrichtungen Werkstücke aufnehmen und ablegen lassen.

Die Tatsache, daß die Trommelachse der Werkzeugmaschine in ungefähr vertikaler Richtung verläuft, läßt sich vorteilhaft dadurch weiterhin konsequent ausnützen, daß die ersten Leitungsstrangabschnitte an dem stationären Halter hängend angeordnet sind, so daß die Schwerkraft dazu eingesetzt werden kann, um eine Vorzugsrichtung für eine Ausrichtung der ersten Leitungsstrangabschnitte vorzugeben.

Darüber hinaus ist es ergänzend oder alternativ ebenfalls vorteilhaft, wenn die zweiten Leitungsstrangabschnitte an dem mit der Trommel mitdrehenden Halter hängend angeordnet sind, so daß auch hier die Schwerkraft dazu ausgenutzt werden kann, den Leitungsstrangabschnitten eine Vorzugsrichtung vorzugeben.

In beiden Fällen wirkt die Schwerkraft dahingehend auf die Leitungsstrangabschnitte ein, daß sie diese versucht in ihrer Längsrichtung definiert auszurichten.

Besonders günstig ist es bei derartigen erfindungsgemäßen Lösungen, wenn der Zwischenhalter von mindestens einem der Leitungsstrangabschnitte hängend gehalten ist, so daß auch damit eine Ausrichtung des Zwischenhalters möglich ist und andererseits der Zwischenhalter noch gleichzeitig im Sinne einer straffenden Ausrichtung der Leitungsstrangabschnitte auf diese einwirkt.

Eine hinsichtlich des Aufbaus besonders günstige Lösung der erfindungsgemäßen Werkzeugmaschine mit ungefähr vertikal ausgerichteter Trommelachse sieht vor, daß sich in dem Maschinengestell von dem stationären Halter ausgehend ein trommelachsennaher Raum in im wesentlichen vertikaler Richtung bis zu der Trommel erstreckt, in welchem dann die Leitungsstränge vorteilhaft angeordnet werden können.

Insbesondere lassen sich dann die Leitungsstränge vorteilhaft von oben in einen derartigen Raum einführen.

Insbesondere dann, wenn die Trommel noch zusätzlich mit einem trommelachsennahen Durchbruch versehen ist, ist vorteilhafterweise vorgesehen, daß sich der trommelachsennahe Raum bis in den Durchbruch der Trommel hineinerstreckt.

Die Baulänge oder Bauhöhe der Drehversorgungseinheit läßt sich insbesondere dann gering halten, wenn sich der trommelachsennahe Raum bis nahe einer unteren Stirnseite der Trommel erstreckt.

Eine hinsichtlich der Integration der erfindungsgemäßen Drehversorgungseinheit besonders zweckmäßige Lösung sieht vor, daß der stationäre Halter an einer oberen Abdeckung des Maschinengestells gehalten ist, so daß sich die gesamte Drehversorgungseinheit im wesentlichen unterhalb der oberen Abdeckung des Maschinengestells innerhalb desselben erstreckt.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: ein Ausführungsbeispiel einer erfindungsgemäßen Werkzeugmaschine im Längsschnitt;
- Fig. 2: einen vergrößerten Teilausschnitt im Bereich A in Fig. 1 mit einem Schnittverlauf längs Linie 2-2 in Fig. 3;
- Fig. 3: eine Draufsicht längs Linie 3-3 in Fig. 2 und
- Fig. 4: eine vergrößerte Draufsicht längs Linie 4-4 in Fig. 1.

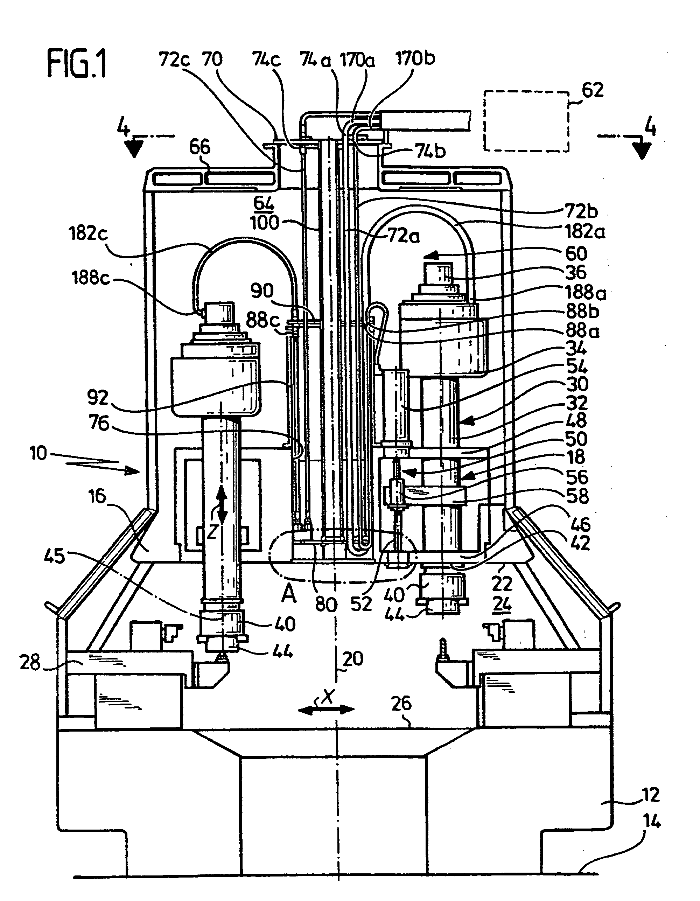

Ein Ausführungsbeispiel einer erfindungsgemäßen Werkzeugmaschine, dargestellt in Fig. 1, umfaßt ein als Ganzes mit 10 bezeichnetes Maschinengestell, welches mit einem Untergestell 12 auf einer Aufstellfläche 14 steht. Auf dem Untergestell 12 ruht ein als Ganzes mit 16 bezeichneter Maschinenständer an welchem eine als Ganzes mit 18 bezeichnete Spindeltrommel um eine Trommelachse 20 drehbar gelagert ist, wobei die Trommelachse 20 vorzugsweise ungefähr senkrecht zu der Aufstellfläche 14 verläuft.

Die Spindeltrommel 18 ist dabei mit einer Stirnseite 22 einem Arbeitsraum 24 zugewandt, welcher zwischen der Stirnseite 22 und einer Oberseite 26 des Untergestells 12 liegt. In dem Arbeitsraum 24 sind einerseits stationär am Untergestell 12 angeordnete Werkzeugschlitten 28 vorgesehen, welche vorzugsweise in einer radial zur Trommelachse 20 verlaufenden X-Achse bewegbar sind und mehrere relativ zum Untergestell 12 stationär, vorzugsweise in gleichen Winkelabständen, angeordnete Spindelstationen definieren, von denen in Fig. 1 zwei einander gegenüberliegende Spindelstationen dargestellt sind.

In der Spindeltrommel 18 sind als Werkstückspindeln ausgebildete Bearbeitungseinrichtungen 30 vorgesehen, welche vorzugsweise mit ihren Pinolen 32 in Richtung einer parallel zur Trommelachse 20 verlaufenden Z-Achse verschiebbar gelagert sind. Dabei trägt jede der Arbeitsspindeln 30 einen gemeinsam mit dieser bewegbaren Spindelantrieb 34 und eine Betätigungseinrichtung 36 für ein Werkstückspannfutter 40, welches an einem dem Arbeitsraum zugewandten Ende 42 der Arbeitsspindel 30 angeordnet ist und in welches ein Werkstück 44 einsetzbar ist, das damit um eine ungefähr vertikale Spindelachse 45 zur Bearbeitung in den Spindelstationen drehbar ist.

Zum Verschieben der Arbeitsspindeln 30 in Richtung der Z-Achse sind die Pinolen 32 in zwei im Abstand voneinander angeordneten Lagerschilden 46 und 48 der Spindeltrommel 18 in Richtung der Z-Achse verschiebbar geführt und über einen als Ganzes mit 50 bezeichneten Linearantrieb in dieser Richtung bewegbar. Der Linearantrieb 50 umfaßt einerseits eine in der Spindeltrommel 18 drehbar gelagerte und ungefähr parallel zur Trommelachse 20 verlaufende Gewindespindel 52, welche über einen an der Spindeltrommel 18 angeordneten Z-Achs-Antrieb 54 antreibbar ist. Die Gewindespindel 52 durchsetzt dabei eine Spindelmutter 56, welche über einen Halter 58 fest mit der jeweiligen Pinole 32 der jeweiligen Arbeitsspindel 30 verbunden ist, so daß durch ein Verdrehen der Gewindespindel 52 die Spindelmutter 56 und mit dieser die Pinole 32 in Richtung der Z-Achse und somit parallel zur Trommelachse 20 bewegbar ist.

Eine Versorgung der mit der Spindeltrommel 18 mitdrehenden Spindelantriebe 34 und Betätigungseinrichtungen 36 der Arbeitsspindeln 30 und der Z-Achs-Antriebe 54 erfolgt über eine Drehversorgungseinheit 60, welche eine Verbindung zwischen einer nur schematisch gestrichelt angedeuteten Steuer- und Versorgungseinrichtung 62, die stationär entweder am Maschinengestell 10 oder neben diesem angeordnet ist, und der drehbaren Spindeltrommel 18 herstellt.

Die Drehversorgungseinheit 60 ist in einem sich um die Trommelachse 20 herum erstreckenden trommelachsnahen Raum 64 angeordnet und umfaßt einen auf einer dem Arbeitsraum 24 gegenüberliegenden Seite der Spindeltrommel 18 vorgesehenen Abdeckung 66 des Maschinenständers 16 angeordneten stationären Halter 70, welcher beispielsweise in Form einer sich senkrecht zur Trommelachse 20 erstreckenden Platte ausgebildet ist.

Von diesem Halter 70 erstrecken sich, wie in Fig. 1 dargestellt, erste Leitungsstrangabschnitte 72a, 72b und 72c, welche mit ihren Enden 74a, 74b und 74c am stationären Halter 70 zumindest in Richtung der Trommelachse 20 unbeweglich fixiert sind. Die ersten Leitungsstrangabschnitte 72a, 72b und 72c verlaufen dabei in einer Grundstellung der Trommel 18 zum Maschinengestell 10 parallel zur Trommelachse 20 in Richtung der Stirnseite 22 der Spindeltrommel 18 in einen zentralen Schacht 76 der Spindeltrommel 18 hinein bis zu einem in Fig. 1, 2 und 3 dargestellten Zwischenhalter 80, an welchem die ersten Leitungsstrangabschnitte 72a, 72b und 72c mit ihren zwischenhalterseitigen Enden 78a, 78b und 78c fixiert sind.

Dann erfolgt im Bereich des Zwischenhalters 80 eine Verbindung der zwischenhalterseitigen Enden 78a, 78b und 78c der ersten Leitungsstrangabschnitte 72a, 72b und 72c mit zwischenhalterseitigen Enden 84a, 84b und 84c von zweiten Leitungsstrangabschnitten 82a, 82b und 82c, wobei die zweiten Leitungsstrangabschnitte 82a, 82b und 82c in größerem radialem Abstand von der Trommelachse 20 angeordnet sind als die ersten Leitungsstrangabschnitte 72a,72b und 72c.

Diese zweiten Leitungsstrangabschnitte 82a, 82b und 82c verlaufen dann in der Grundstellung der Spindeltrommel 18 wiederum vom Zwischenhalter 80 ausgehend ebenfalls ungefähr parallel zur Trommelachse 20 in Richtung der Abdeckung 66 bis zu einem drehfest mit der Spindeltrommel 18 verbundenen und somit mit dieser mitdrehenden Halter 90, welcher vorzugsweise ebenfalls als Platte ausgebildet ist und beispielsweise in einem mittigen Bereich zwischen dem Zwischenhalter 80 und dem stationären Halter 70 angeordnet ist. Der mitdrehende Halter 90 sitzt dabei vorzugsweise auf einer sich von einer dem Arbeitsraum 24 gegenüberliegenden Seite der Spindeltrommel 18 weg erstreckenden Hülse 92 und die zweiten Leitungsstrangabschnitte 82a, 82b und 82c sind mit ihren mitdrehenden Enden 88a, 88b und 88c an dem mitdrehenden Halter 90 gehalten.

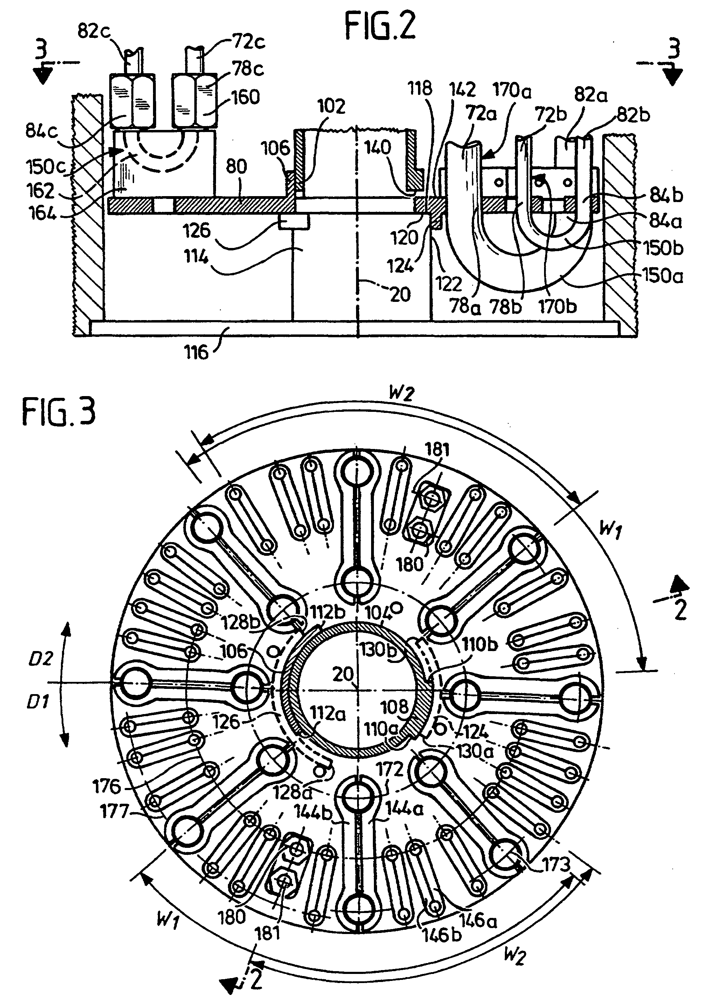

Zur Führung des Zwischenhalters 80 in einem Bereich nahe der Stirnseite 22 innerhalb des zentralen Schachts 76 der Spindeltrommel 18 ist ein ausgehend vom stationären Halter 70 sich in Richtung der Stirnseite 22 der Spindeltrommel 18 erstreckendes Führungsrohr 100 vorgesehen, welches im Bereich eines unteren Endes 102 eine zur Trommelachse 20 zylindrische äußere Führungsfläche 104 bildet, an welcher der Zwischenhalter 80 mit einem als Bogensegment ausgebildeten Flanschsegment 106 anliegt. Gleichzeitig weist das Führungsrohr im Bereich des unteren Endes 102 ein radial nach außen überstehendes Anschlagsegment 108 auf, welches an seinen Bogenenden in radialer Richtung zur Trommelachse 20 verlaufende Anschlagflächen 110a und 110b bildet, die zur Begrenzung der Drehung des Zwischenhalters 80 mit endseitigen in radialer Richtung zur Trommelachse 20 verlaufenden Anschlagflächen 112a und 112b des Flanschsegments 106 zusammenwirken. Die jeweils einander zugewandten Endflächen 110a und 112a sowie 110b und 112b sind dabei in der in Fig. 3 dargestellten Grundstellung der Spindeltrommel 18 und somit auch des Zwischenhalters 80 in gleichen Winkelabständen W1 voneinander angeordnet.

Das Führungsrohr 100 ist ferner noch mit dem unteren Ende 102 durch einen in das Führungsrohr 100 eingreifenden Zentrierkörper 114 zentriert zur Trommelachse 20 geführt, wobei der Zentrierkörper 114 über eine den zentralen Schacht 76 der Spindeltrommel im Bereich der Stirnseite 22 derselben verschließenden Stirnplatte 116 zentriert zur Spindeltrommel 18 gehalten und drehfest mit dieser verbunden ist.

Der Zentrierkörper 114 weist ferner noch einen Tragflansch 118 auf, welcher ringförmig zur Trommelachse 20 verläuft und auf welchem der Zwischenhalter 80 mit einer Ringflanschfläche 120 in der Grundstellung auflegbar ist.

Außerdem ist der Zentrierkörper 114 noch mit einer zur Trommelachse 20 zylindrische Führungsfläche 122 versehen, an welcher der Zwischenhalter 80 mit einem Flanschsegment 124 anliegend geführt ist, wobei das Flanschsegment 124 vorzugsweise dem Flanschsegment 106 bezüglich der Trommelachse 20 gegenüberliegend angeordnet ist.

Ferner weist der Zentrierkörper 114 noch einen radial nach außen über die Zylinderfläche 122 überstehenden Kammbogen 126 auf, welcher mit in radialer Richtung zur Trommelachse 20 verlaufenden Endflächen 128a und 128b versehen ist, welche ebenfalls in radialer Richtung zur Trommelachse 20 verlaufenden Endflächen 130a bzw. 130b des Flanschsegments 124 zugewandt angeordnet sind, wobei in der Grundstellung des Zwischenhalters 80 relativ zur Spindeltrommel 18 die Endflächen 128a und 130a sowie 128b und 130b gleiche Winkelabständen W2 voneinander aufweisen.

Der Zwischenhalter 80 ist bei der erfindungsgemäßen Lösung sowohl gegenüber dem Maschinenständer 16 als auch gegenüber der Spindeltrommel 18 frei drehbar, wobei allerdings eine Begrenzung der maximalen Verdrehung durch die Winkelabstände W1 und W2 vorgegeben ist.

Die Grundstellung der Spindeltrommel 18 gegenüber dem Maschinenständer 16 ist so gewählt, daß ausgehend von dieser Grundstellung die Spindeltrommel relativ zum Maschinenständer in einer Drehrichtung D1 um maximal 180° gedreht werden kann und in einer entgegengesetzten Drehrichtung D2 ebenfalls um maximal 180°, das heißt, daß insgesamt eine Drehung der Spindeltrommel 18 relativ zu dem Maschinenständer 16 um einen Winkel von kleiner 360° möglich ist.

Die Grundstellung ist dabei so gewählt, daß in dieser die Leitungsstrangabschnitte 72a, 72b und 72c sowie 82a, 82b und 82c unverdreht sind, so daß beispielsweise im Fall der Leitungsstrangabschnitte 72a und 72b eine Verdrehung derselben um einen Winkel von maximal 180° in Drehrichtung D1 und maximal 180° in der entgegengesetzten Drehrichtung D2 erfolgen kann. Ferner liegt der erfindungsgemäßen Lösung die Maßgabe zugrunde, daß sowohl eine Verdrehung der ersten Leitungsstrangabschnitte 72a und 72b als auch der zweiten Leitungsstrangabschnitte 82a und 82b erfolgen soll, um insgesamt die Verdrehung der ersten Leitungsstrangabschnitte 72a, b sowie der zweiten Leitungsstrangabschnitte 82a, b möglichst gering zu halten.

Ferner soll die Verdrehung der ersten Leitungsstrangabschnitte 72a, b und der zweiten Leitungsstrangabschnitte 82a, b pro Längeneinheit ungefähr gleich groß sein, so daß die maximale Verdrehung des zwischenhalterseitigen Endes 78a, b der ersten Leitungsstrangabschnitte 72a, b relativ zum stationären Ende 74a, b sich zu der relativen Verdrehung des mitdrehenden Endes 88a, b der zweiten Leitungsstrangabschnitte 82a, b relativ zum zwischenhalterseitigen Ende 84a, b so verhält, wie die Länge der ersten Leitungsstrangabschnitte 72a, b zwischen den Enden 74a, b und 78a, b zu der Länge der zweiten Leitungsstrangabschnitte 82a, b zwischen deren Enden 84a, b und 88a, b.

Entsprechend der für die ersten Leitungsstrangabschnitte 72a, b und die zweiten Leitungsstrangabschnitte 82a, b vorgesehenen maximalen Verdrehung sind auch die Winkelabstände W1 und W2 dimensioniert, nämlich so, daß diese den vorgesehenen maximalen Verdrehungen entsprechen, so daß bei maximaler Verdrehung der Spindeltrommel 18 ausgehend von der Grundstellung in Drehrichtung D1 die ersten Leitungsstrangabschnitte 72a, b um den Winkel W1 verdreht sind und die zweiten Leitungsstrangabschnitte 82a, b um den Winkel W2. Um genau diese Winkel W1 und W2 ist aufgrund der Endflächen 110a und 112a sowie 128a,und 130a die Drehung des Zwischenhalters 80 relativ zum Führungsrohr 100 und somit zum stationären Halter 70 bzw. relativ zum Zentrierkörper 114 und somit zur Spindeltrommel 18 begrenzt, so daß bei maximaler Verdrehung der Spindeltrommel 18 in der Richtung D1 einerseits die Endflächen 110a und 112a und andererseits die Endflächen 128b und 130b aneinander anliegen und somit der Zwischenhalter 80 gegenüber der Grundstellung in einer Drehstellung gehalten ist, welche gegenüber dem stationären Halter 80 um den Winkel W1 gedreht ist und gegenüber der Spindeltrommel 18 um den Winkel W2.

In gleicher Weise ist eine Drehung in der Drehrichtung D2 möglich, wobei die Verdrehung des Zwischenhalters 80 bei maximal gedrehter Spindeltrommel 18 um den Winkel W1 gegenüber dem stationären Halter 70 und den Winkel W2 gegenüber der Spindeltrommel 18 erfolgt ist.

Die gleichmäßige Verdrehung der ersten Leitungsstrangabschnitte 72a, b und der zweiten Leitungsstrangabschnitte 82a, b pro Längeneinheit führt auch dazu, daß sich die ersten Leitungsstrangabschnitte 72a, b und die zweiten Leitungsstrangabschnitte 82a, b um im wesentlichen denselben Betrag verkürzen, so daß insgesamt zusätzlich zur Verdrehung des Zwischenhalters 80 auch noch eine Verschiebung desselben in Richtung der Trommelachse 20, und zwar zum stationären Halter 70 hin, erfolgt. Aus diesem Grund ist das Führungsrohr 100 so ausgebildet, daß dessen Endfläche 140 in der Grundstellung des Zwischenhalters 80 mit Abstand von einer Oberfläche 142 desselben steht, so daß der Zwischenhalter 80 in Richtung des stationären Halters 70 sich bewegen kann, jedoch nach wie vor an dem Zentrierkörper 114 und an dem Führungsrohr 100 geführt ist.

Vorzugsweise ist, wie in Fig. 3 dargestellt, eine Fixierung der Enden 78a, b der ersten Leitungsstrangabschnitte 72a, b und der Enden 84a, b der zweiten Leitungsstrangabschnitte 82a, b an dem Zwischenhalter 80 mittels an den Zwischenhaltern 80 gehaltenen Klammern 144a, b bzw. 146a, b realisiert, welche jeweils die beiden Enden 78a, b und 84a, b gleichzeitig einspannen und damit kraftschlüssig fixieren. Eine Verbindung der Enden 78a, b mit den Enden 84a, b erfolgt über einen eine Zwischenumlenkung darstellenden Bogen 150a bzw. 150b des jeweiligen Leitungsstrangs, so daß insgesamt die Leitungsstrangabschnitte 72a, b und 82a, b über die Bögen 150a, b miteinander verbunden sind und mittels eines durchgehenden Leitungsstrangs 170 realisierbar sind.

Vorzugsweise handelt es sich bei den Leitungssträngen 72a, b und 74a, b um elektrische Leitungsstränge bei welchen vorzugsweise Einzeladern derselben ohne Mantel frei nebeneinanderliegend angeordnet sind, um eine leichtere Verdrillung der Leitungsstränge zu ermöglichen.

Alternativ ist es aber auch denkbar, die einzelnen Leitungsstrangabschnitte 72a, b und 82a, b wendelförmig auszubilden, so daß noch eine erleichterte Verdrehbarkeit derselben gegeben ist.

Bei den Leitungssträngen 72c und 82c handelt es sich beispielsweise um Schlauchleitungen zur Zuführung fluidischer Energie zu den Betätigungseinrichtungen 36, wobei ein zuführender Leitungsstrang vorgesehen ist, mit welchem alle Betätigungseinrichtungen 36 verbunden sind, wobei die Betätigungseinrichtungen noch Ventile zum Schalten der fluidischen Energie aufweisen, welche torsionsempfindlich sind.

Aus diesem Grund ist bei derartigen torsionsempfindlichen Schlauchleitungen vorgesehen, daß im Bereich der Enden 74c und 78c sowie 84c und 88c jeweils noch Drehanschlüsse 160 vorgesehen sind, welche es erlauben, eine Torsion der Leitungsstrangabschnitte 72c und 82c zu vermeiden. Diese Drehverbindungen 160 sind beispielsweise im Bereich der Enden 78c und 84c mit einem einen Umlenkkanal 162 als Zwischenumlenkung 150c aufweisenden Umlenkkörper 164 verbunden, welcher fest auf dem Zwischenhalter 80 montiert ist und an welchem die Drehanschlüsse 160 angeordnet sind.

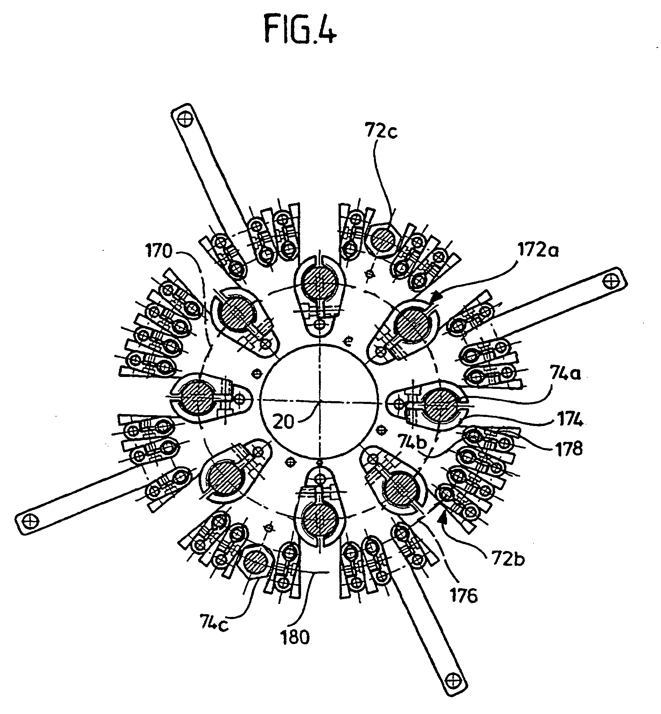

Vorzugsweise ist für jede Arbeitsspindel 30 zur Versorgung von deren Spindelantrieb 34 und der Betätigungseinrichtung 36 ein Leitungsstrang 170a vorgesehen, so daß, wie in Fig. 3 und 4 dargestellt, beispielsweise bei acht Spindeln acht Leitungsstränge 170a der Drehverbindungseinheit 60 erforderlich sind, deren erste Leitungsstrangabschnitte 72a auf einer zur Trommelachse 20 koaxialen Zylindermantelfläche 172 in gleichen Winkelabständen angeordnet sind und sich im wesentlichen in dieser Zylindermantelfläche 172 parallel zur Trommelachse 20 bis zum Zwischenhalter 80 erstrecken (Fig. 3und 4) und deren zweite Leitungsstrangabschnitte 82a in einer Zylindermantelfläche 173 verlaufen (Fig. 3).

Vorzugsweise sind dabei ebenfalls zur Befestigung der Leitungsstränge an dem stationären Halter 70 Klammern 174 zum kraftschlüssigen Klammern der Leitungsstrangabschnitte 72a im Bereich deren Enden 74a vorgesehen (Fig. 4).

Ferner ist zur Versorgung des jeder Arbeitsspindel 30 zugeordneten Z-Achs-Antriebs 54 eine Vielzahl von Leitungssträngen 170b mit ersten Leitungsstrangabschnitten 72b erforderlich, die alle auf einer weiteren Zylindermantelfläche 176 angeordnet sind und im Bereich des stationären Halters 70 ebenfalls mit Klammern 178 an ihren Enden 74b fixiert sind (Fig. 4).

Alle zweiten Leitungsstrangabschnitte 82a und 82b liegen dann ebenfalls auf in Fig. 3 dargestellten Zylinderflächen 177, mit jeweils noch größeren Radien als die zylindermantelflächen 172 und 176.

Auch die ersten Leitungsstrangabschnitte 72c verlaufen in einer für diese eigens vorgesehenen Zylindermantelfläche 180 und auch die entsprechenden zweiten Leitungsstrangabschnitte 82c verlaufen in einer eigens für diese vorgesehenen Zylindermantelfläche 181, die einen größeren Radius aufweist als die Zylindermantelfläche 180.

Eine besonders auch für die in Richtung der Z-Achse bewegbaren Spindelantriebe 34 und Ventile für die Betätigungseinrichtung 36 günstige Führung der Leitungsstränge 170a ergibt sich dann, wenn diese ausgehend von den Enden 88a einen zur Stirnseite 22 der Spindeltrommel 18 hin offenen U-förmigen Bogen 182a bilden, der ausgehend von dem am mitdrehenden Halter 90 festgelegten Ende 88a so variabel ist, daß ein mit der Arbeitsspindel 30 fest verbundenes Ende 188a in der Richtung der Z-Achse bewegbar ist, so daß gleichzeitig eine flexible die Bewegungen in Richtung der Z-Achse ausgleichende Versorgung der Arbeitsspindel 30 geschaffen ist.

In gleicher Weise bildet auch der als Fluidleitung ausgebildete Leitungsstrang 170c einen U-förmigen Bogen 182c zur Versorgung einer Arbeitsspindel.

## Patentansprüche

1. Werkzeugmaschine umfassend ein Maschinengestell (10), eine um eine Trommelachse (20) innerhalb eines maximalen Winkelbereichs gegenüber dem Maschinengestell drehbar angeordnete Trommel (18) mit einer Vielzahl von an dieser gehaltenen Bearbeitungseinrichtungen (30) und mit der Trommel mitdrehbaren, den Bearbeitungseinrichtungen (30) zugeordneten Antrieben (34), eine stationäre Steuer- und Versorgungseinrichtung für die Antriebe und eine Drehversorgungseinheit (62), welche einerseits mit der drehbaren Trommel verbundene sowie andererseits stationär gegenüber dem Maschinengestell gehaltene unterbrechungsfreie und durch Drehung der Trommel verformbare Leitungsstränge aufweist, welche sich in Richtung der Trommelachse (20) erstrecken,
**dadurch gekennzeichnet, daß** die Leitungsstränge (170) sich in einen trommelachsennahen Durchbruch (76) der Trommel (18) hineinerstrecken.

2. Werkzeugmaschine nach dem Oberbegriff des Anspruchs 1 oder nach Anspruch 1, **dadurch gekennzeichnet, daß** jeder Leitungsstrang (170) einen sich in einer ersten Richtung von einem stationären Halter (70) zu einer um die Trommelachse (20) frei drehbar angeordneten Zwischenumlenkung (150) erstreckenden ersten Leitungsstrangabschnitt (72) und einen sich von der Zwischenumlenkung (150) in einer zur ersten Richtung entgegengesetzten zweiten Richtung zu einem mit der Trommel (18) mitdrehenden Halter (90) erstreckenden zweiten Leitungsstrangabschnitt (82) aufweist.

3. Werkzeugmaschine nach Anspruch 2, **dadurch gekennzeichnet, daß** die ersten Leitungsstrangabschnitte (72) und die zweiten Leitungsstrangabschnitte (82) in unterschiedlichem radialem Abstand von der Trommelachse (20) verlaufen.

4. Werkzeugmaschine nach Anspruch 3, **dadurch gekennzeichnet, daß** die zweiten Leitungsstrangabschnitte (82) in größerem radialem Abstand von der Trommelachse (20) verlaufen als die ersten Leitungsstrangabschnitte (72).

5. Werkzeugmaschine nach Anspruch 3 oder 4, **dadurch gekennzeichnet, daß** beide Leitungsstrangabschnitte (72, 82) in einem Abstand von der Trommelachse (20) verlaufen, welcher mindestens einer Dicke des jeweiligen Leitungsstrangs (170) entspricht.

6. Werkzeugmaschine nach einem der Ansprüche 2 bis 5, **dadurch gekennzeichnet, daß** eine Zahl von ersten Leitungsstrangabschnitten (72a, b, c) der Leitungsstränge (170) in einer um die Trommelachse (20) herumverlaufenden ersten Fläche (172, 176, 180) verläuft und die entsprechende Zahl von zweiten Leitungsstrangabschnitten (82a, b, c) in einer um die Trommelachse (20) herum verlaufenden zweiten Fläche (173, 177, 181) verläuft.

7. Werkzeugmaschine nach einem der Ansprüche 2 bis 6, **dadurch gekennzeichnet, daß** die Zwischenumlenkungen (150) der Leitungsstränge (170) an einem um die Trommelachse (20) drehbaren Zwischenhalter (80) geführt sind.

8. Werkzeugmaschine nach einem der Ansprüche 2 bis 7, **dadurch gekennzeichnet, daß** der erste Leitungsstrangabschnitt (72) und der zweite Leitungsstrangabschnitt (82) sich bei Drehung der Trommel (18) derart verdrehen, daß die Drehwinkel pro Längeneinheit des ersten (72) und des zweiten Leitungsstrangabschnitts (82) ungefähr gleich groß sind.

9. Werkzeugmaschine nach Anspruch 7 oder 8, **dadurch gekennzeichnet, daß** der Zwischenhalter (80) um die Trommelachse (20) frei drehbar ist.

10. Werkzeugmaschine nach Anspruch, 9, **dadurch gekennzeichnet, daß** bei maximaler Verdrehung der Trommel (18) relativ zum Maschinengestell (10) der Zwischenhalter (80) relativ zum Maschinengestell (10) maximal um einen Winkel drehbar ist, welcher dem dem ersten Leitungsstrangabschnitt (72) zugeordneten maximalen Teilwinkel entspricht.

11. Werkzeugmaschine nach Anspruch 9 oder 10, **dadurch gekennzeichnet, daß** bei maximaler Verdrehung der Trommel (18) relativ zum Maschinengestell (10) der Zwischenhalter (80) relativ zu der Trommel (18) maximal um einen Winkel drehbar ist, welcher dem dem zweiten Leitungsstrangabschnitt (82) zugeordneten maximalen Teilwinkel entspricht.

12. Werkzeugmaschine nach einem der Ansprüche 7 bis 11, **dadurch gekennzeichnet, daß** der Zwischenhalter (80) in Richtung der Trommelachse (20) bewegbar gehalten ist.

13. Werkzeugmaschine nach einem der voranstehenden Ansprüche, **dadurch gekennzeichnet, daß** die Trommelachse (20) ungefähr in vertikaler Richtung verläuft.

14. Werkzeugmaschine nach einem der voranstehenden Ansprüche, **dadurch gekennzeichnet, daß** die ersten Leitungsstrangabschnitte (72) an dem stationären Halter (70) hängend angeordnet sind.

15. Werkzeugmaschine nach einem der voranstehenden Ansprüche, **dadurch gekennzeichnet, daß** die zweiten Leitungsstrangabschnitte (82) an dem mit der Trommel (18) mitdrehenden Halter (90) hängend angeordnet sind.

16. Werkzeugmaschine nach Anspruch 14 oder 15, **dadurch gekennzeichnet, daß** der Zwischenhalter (80) von mindestens einem der Leitungsstrangabschnitte (72, 82) hängend gehalten ist.

17. Werkzeugmaschine nach einem der voranstehenden Ansprüche, **dadurch gekennzeichnet, daß** sich in dem Maschinengestell (10) von dem stationären Halter (70) ausgehend ein trommelachsennaher Raum (64) in im wesentlichen vertikaler Richtung bis zu der Trommel (18) erstreckt.

18. Werkzeugmaschine nach Anspruch 17, **dadurch gekennzeichnet, daß** sich der trommelachsennahe Raum (64) in den Durchbruch (76) der Trommel (18) hinein erstreckt.

19. Werkzeugmaschine nach Anspruch 18, **dadurch gekennzeichnet, daß** sich der trommelachsennahe Raum (64) bis nahe an eine untere Stirnseite (22) der Trommel (18) erstreckt.

20. Werkzeugmaschine nach einem der voranstehenden Ansprüche, **dadurch gekennzeichnet, daß** der stationäre Halter (70) an einer oberen Abdeckung (66) des Maschinengestells (10) gehalten ist.

## Claims

1. Machine tool comprising a machine frame (10), a drum (18) arranged for rotation about a drum axis (20) within a maximum angular range in relation to the machine frame and having a plurality of machining devices (30) held thereon and drives (34) rotatable with the drum and associated with the machining devices (30), a stationary control and supply device for the drives and a rotary supply unit (62) having line systems free from interruptions and deformable by rotation of the drum, which, on the one hand, are connected to the rotatable drum and, on the other hand, are held stationary in relation to the machine frame, and which extend in the direction of the drum axis (20), **characterized in that** the line systems (170) extend into a passage (76) of the drum (18) close to the drum axis.

2. Machine tool as defined in the preamble to claim 1 or as defined in claim 1, **characterized in that** each line system (170) has a first line system section (72) extending in a first direction from a stationary holder (70) to an intermediate deflection (150) arranged so as to be freely rotatable about the drum axis (20) and a second line system section (82) extending in a second direction opposite to the first direction from the intermediate deflection (150) to a holder (90) rotating with the drum (18).

3. Machine tool as defined in claim 2, **characterized in that** the first line system sections (72) and the second line system sections (82) extend at a different radial distance from the drum axis (20).

4. Machine tool as defined in claim 3, **characterized in that** the second line system sections (82) extend at a greater radial distance from the drum axis (20) than the first line system sections (72).

5. Machine tool as defined in claim 3 or 4, **characterized in that** both line system sections (72, 82) extend at a distance from the drum axis (20) corresponding at least to a thickness of the respective line system (170).

6. Machine tool as defined in any one of claims 2 to 5, **characterized in that** a number of first line system sections (72a, b, c) of the line systems (170) extend in a first surface (172, 176, 180) extending around the drum axis (20), and the corresponding number of second line system sections (82a, b, c) extend in a second surface (173, 177, 181) extending around the drum axis (20).

7. Machine tool as defined in any one of claims 2 to 6, **characterized in that** the intermediate deflections (150) of the line systems (170) are guided on an intermediate holder (80) rotatable about the drum axis (20).

8. Machine tool as defined in any one of claims 2 to 7, **characterized in that** the first line system section (72) and the second line system section (82) twist during rotation of the drum (18) in such a manner that the angles of rotation per unit of length of the first (72) and the second line system section (82) are approximately equal.

9. Machine tool as defined in claim 7 or 8, **characterized in that** the intermediate holder (80) is freely rotatable about the drum axis (20).

10. Machine tool as defined in claim 9, **characterized in that** during maximum turning of the drum (18) relative to the machine frame (10) the intermediate holder (80) is rotatable relative to the machine frame (10) at the most through an angle corresponding to the maximum pitch angle associated with the first line system section (72).

11. Machine tool as defined in claim 9 or 10, **characterized in that** during maximum turning of the drum (18) relative to the machine frame (10) the intermediate holder (80) is rotatable relative to the drum (18) at the most through an angle corresponding to the maximum pitch angle associated with the second line system section (82).

12. Machine tool as defined in any one of claims 7 to 11, **characterized in that** the intermediate holder (80) is held so as to be movable in the direction of the drum axis (20).

13. Machine tool as defined in any one of the preceding claims, **characterized in that** the drum axis (20) extends approximately in a vertical direction.

14. Machine tool as defined in any one of the preceding claims, **characterized in that** the first line system sections (72) are arranged so as to be suspended on the stationary holder (70).

15. Machine tool as defined in any one of the preceding claims, **characterized in that** the second line system sections (82) are arranged so as to be suspended on the holder (90) rotating with the drum (18).

16. Machine tool as defined in claim 14 or 15, **characterized in that** the intermediate holder (80) is held so as to be suspended from at least one of the line system sections (72, 82).

17. Machine tool as defined in any one of the preceding claims, **characterized in that** a space (64) close to the drum axis extends in the machine frame (10) proceeding from the stationary holder (70) in an essentially vertical direction as far as the drum (18).

18. Machine tool as defined in claim 17, **characterized in that** the space (64) close to the drum axis extends into the passage (76) of the drum (18).

19. Machine tool as defined in claim 18, **characterized in that** the space (64) close to the drum axis extends as far as close to a lower end face (22) of the drum (18).

20. Machine tool as defined in any one of the preceding claims, **characterized in that** the stationary holder (70) is held on an upper cover (66) of the machine frame (10).

## Revendications

1. Machine-outil comprenant un bâti à machiner (10), un tambour (13) disposé de manière à pivoter autour d'un axe de tambour (20) à l'intérieur d'une zone angulaire maximale par rapport au bâti à machiner, avec un nombre de dispositifs de manipulation (30) fixés sur celui-ci et des mécanismes d'entraînement (34) pivotants avec le tambour et fixés aux dispositifs à machiner (30), un dispositif de commande et d'alimentation fixe pour les mécanismes d'entraînement et une unité d'alimentation tournante (62) laquelle comporte des tuyaux d'une part reliés au tambour pivotant et d'autre part maintenus fixes par rapport au bâti à machiner et s'étendant sans interruption et déformables par pivotement du tambour, lesquels tuyaux s'étendent dans le sens de l'axe du tambour (20), **caractérisé en ce que** les tuyaux (170) s'étendent à l'intérieur d'une ouverture du tambour (18) proche de l'axe du tambour (76).

2. Machine-outil selon le préambule de la revendication 1 ou selon la revendication 1, **caractérisé en ce que** chaque tuyau (170) comporte un premier tronçon de tuyau (72) s'étendant dans une première direction à partir d'un support fixe (70) vers un dispositif de renvoi intermédiaire (150) disposé de manière à pivoter librement autour de l'axe du tambour (20) et un deuxième tronçon de tuyau (82) s'étendant à partir du dispositif de renvoi intermédiaire (150) dans une deuxième direction contraire à la première direction vers un support tournant (90) avec le tambour (18).

3. Machine-outil selon la revendication 2, **caractérisé en ce que** les premiers tronçons de tuyau (72) et les deuxièmes tronçons de tuyau (82) passent à une distance radiale différente de l'axe du tambour (20).

4. Machine-outil selon la revendication 3, **caractérisé en ce que** les deuxièmes tronçons de tuyau (82) passent à une distance radiale plus grande de l'axe du tambour (20) que les premiers tronçons de tuyau (72).

5. Machine-outil selon la revendication 3 ou 4, **caractérisé en ce que** les deux tronçons de tuyau (72, 82) passent à une distance de l'axe du tambour (20), qui correspond au moins à une épaisseur de chaque tuyau (170).

6. Machine-outil selon l'une des revendications 2 à 5, **caractérisé en ce qu'**un certain nombre des premiers tronçons de tuyau (72a, b, c) des tuyaux (170) passe dans une première surface (172, 176, 180) entourant l'axe du tambour (20) et **en ce que** le nombre correspondant de deuxièmes tronçons de tuyau (82a, b, c) passe dans une deuxième surface (173, 177, 181) entourant l'axe du tambour (20).

7. Machine-outil selon l'une des revendications 2 à 6, **caractérisé en ce que** les dispositifs de renvoi intermédiaire (150) des tuyaux (170) sont guidés par un support intermédiaire (80) pivotant autour de l'axe du tambour (20).

8. Machine-outil selon l'une des revendications 2 à 7, **caractérisé en ce que** le premier tronçon de tuyau (72) et le deuxième tronçon de tuyau (82) se tordent lors d'une rotation autour du tambour (18), de manière à ce que les angles de rotation par unité de longueur du premier (72) et du deuxième tronçon de tuyau (82) soient à peu près de la même taille.

9. Machine-outil selon la revendication 7 ou 8, **caractérisé en ce que** le support intermédiaire (80) puisse pivoter librement autour de l'axe du tambour (20).

10. Machine-outil selon la revendication 9, **caractérisé en ce que** lors d'une torsion maximale du tambour (18) par rapport au bâti à machiner (10) le support intermédiaire (80) par rapport au bâti à machiner (10) pivote au maximum autour d'un angle, qui correspond à l'angle maximal de division disposé sur le premier tronçon de tuyau (72).

11. Machine-outil selon la revendication 9 ou 10, **caractérisé en ce que** lors d'une torsion maximale du tambour (18) par rapport au bâti à machiner (10) le support intermédiaire (80) par rapport au tambour (18) pivote au maximum autour d'un angle, qui correspond à l'angle maximal de division disposé sur le deuxième tronçon de tuyau (82).

12. Machine-outil selon l'une des revendications 7 à 11, **caractérisé en ce que** le support intermédiaire (80) est maintenu mobile dans le sens de l'axe du tambour (20).

13. Machine-outil selon l'une des revendications précédentes, **caractérisé en ce que** l'axe du tambour (20) passe dans un sens à peu près vertical,

14. Machine-outil selon l'une des revendications précédentes, **caractérisé en ce que** les premiers tronçons de tuyau (72) sont suspendus au support fixe (70).

15. Machine-outil selon l'une des revendications précédentes, **caractérisé en ce que** les deuxièmes tronçons de tuyau (82) sont suspendus au support pivotant (90) avec le tambour(18).

16. Machine-outil selon la revendication 14 ou 15, **caractérisé en ce que** le support intermédiaire (80) est tenu en suspension au moins par un des tronçons de tuyau (72, 82).

17. Machine-outil selon l'une des revendications précédentes, **caractérisé en ce qu'**un espace proche de l'axe du tambour (64) s'étend dans le bâti à machiner (10) à partir d'un support fixe (70) dans une direction essentiellement verticale jusqu'au tambour (18).

18. Machine-outil selon la revendication 17, **caractérisé en ce que** l'espace proche de l'axe du tambour (64) s'étend à l'intérieur de l'ouverture (76) du tambour (18).

19. Machine-outil selon la revendication 18, **caractérisé en ce que** l'espace proche de l'axe du tambour (64) s'étend jusqu'à proximité d'une face avant inférieure (22) du tambour (18).

20. Machine-outil selon l'une des revendications précédentes, **caractérisé en ce que** le support fixe (70) est maintenu sur un couvercle supérieur (66) du bâti à machiner (10).
